# EUROPEAN PATENT SPECIFICATION

(11) **EP 4 230 336 B1**
(45) Date of publication and mention of the grant of the patent: **29.04.2026**
(21) Application number: 21890809.3
(22) Date of filing: 17.09.2021
(51) Int. Cl.: B23K 1/008, C04B 37/02, B23K 1/00, B23K 35/00, B23K 1/19, C04B 37/00, B23K 101/04, B23K 103/00

(54) **BRAZING CONNECTION METHOD FOR SILICON CARBIDE CLADDING**
VERBINDUNGSMETHODE DURCH HARTLÖTEN FÜR BESCHICHTUNGEN AUS SILIZIUMKARBID
PROCÉDÉ DE BRASAGE POUR LE REVÊTEMENT EN CARBURE DE SILICIUM

(30) Priority: 12.11.2020 CN 202011262850
(43) Date of publication of application: 23.08.2023
(73) Proprietor: Ling Dong Nuclear Power Co., Ltd, Shenzhen, Guangdong 518028 (CN); China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: XUE, Jiaxiang, Shenzhen, Guangdong 518031 (CN); LIAO, Yehong, Shenzhen, Guangdong 518031 (CN); REN, Qisen, Shenzhen, Guangdong 518031 (CN); LIU, Tong, Shenzhen, Guangdong 518031 (CN); ZHAI, Jianhan, Shenzhen, Guangdong 518031 (CN); MA, Haibin, Shenzhen, Guangdong 518031 (CN); ZHANG, Xiansheng, Shenzhen, Guangdong 518031 (CN); ZHANG, Yongdong, Shenzhen, Guangdong 518031 (CN); LI, Rui, Shenzhen, Guangdong 518031 (CN); LIU, Yang, Shenzhen, Guangdong 518031 (CN)
(74) Representative: Westphal, Mussgnug & Partner, Patentanwälte mbB
(86) International application number: PCT/CN2021/119167
(87) International publication number: WO 2022/100281

(56) References cited:
- WO-A1-2011/113760
- CN-A- 102 892 540
- CN-A- 103 003 018
- CN-A- 104 030 688
- CN-A- 105 960 681
- CN-A- 108 863 425
- CN-A- 109 336 634
- CN-A- 111 185 686
- CN-A- 112 570 832
- US-B2- 10 217 534

## Description

### FIELD OF THE INVENTION

The present invention relates to the technical field of nuclear fuels, in particular to a brazing joining method.

### DESCRIPTION OF THE RELATED ART

As a structural ceramic material, silicon carbide (SiC) not only has excellent mechanical properties, high temperature properties, and excellent wear resistance properties, but it also has good radiation resistance, hydrothermal corrosion resistance and low neutron absorption cross section in the nuclear application field, which are particularly prominent in the application of cladding materials in nuclear reactors. However, in order to apply SiC cladding materials in the nuclear industry, the joining between the SiC cladding and an end plug must be solved.

SiC ceramics have an extremely high melting point (~2700°C), which makes it rather difficult to achieve a direct fusion welding joint similar to metal. It is usually necessary to add an intermediate joining material for SiC j oint. Common joining methods include brazing, nano-infiltration and transient eutectic phase (NITE phase), solid phase diffusion, MAX phase, glass ceramic, precursor joining, etc. The cladding tube itself is of a thin-walled and long-tube structure, and nuclear fuels are loaded in the SiC cladding tube prior to the joining of the cladding tube, which makes it impossible to apply a large joining pressure and joining temperature when the SiC cladding tube is joined to the end plug. Among the above joining methods, a large joining pressure is usually required for the NITE phase joining method, the solid phase diffusion joining and the MAX phase joining, especially for the NITE phase joining which requires to be performed under high temperature (>1800°C) and high pressure (>10MPa). Therefore, these methods are disadvantageous in joining the SiC cladding tube with the end plug. Although the precursor joining can be performed at low temperature (<1500°C) and low pressure (<1MPa), a large volume shrinkage may occur during the joining process, causing many pores present in the interlayer, which is disadvantageous in the hermeticity of the SiC cladding and leads to a low joining strength. Although the glass-ceramic joining can also be performed at low temperature and low pressure, and can obtain a high joining strength, the SiC cladding has poor hydrothermal corrosion resistance and radiation resistance, which makes the glass-ceramic joining not suitable for SiC cladding joining in nuclear reactors. The metal brazing joining can not only achieve SiC joint at low temperature (~1200°C) and low pressure (~0.1MPa), but it also has a dense interlayer and a high joining strength because a liquid phase is involved in the brazing process. However, by-products generated in the brazing process can easily affect the overall properties of the SiC cladding, especially the high temperature resistance, radiation resistance and hydrothermal corrosion resistance of the brazed cladding.

Brazing joining methods for a silicon carbide cladding are known, for example, from CN 104 030 688 A (10.09.2014, ZHEJIANG LIGHT TOUGH COMPOSITE MATERIALS CO LTD), US 10 217 534 B2 (26.02.2019, EDISON WELDING INST INC [US]) and US 10 032 527 B2 (24.07.2018, EDISON WELDING INST INC [US]).

### SUMMARY OF THE INVENTION

The technical problem to be solved by the present invention is to provide a brazing joining method for a silicon carbide cladding in view of the defects of the above-mentioned prior art. The technical problem is solved by a brazing joining method for a silicon carbide cladding having the features of claim 1.

The technical solution adopted by the present invention to solve the technical problem is defined in claim 1. The dependent claims refer to preferred embodiments.

The brazing joining method for the silicon carbide cladding of the present invention is based on a brazing joining method which uses Al and Si as joining materials to form an interlayer with an Al/Si/Al three-layer structure between the cladding tube and the end plug, which can achieve high-strength and reliable joining of SiC cladding, making the SiC cladding have good high temperature resistance and hydrothermal corrosion resistance, thereby meeting the requirements of nuclear applications.

The brazing joining method for the silicon carbide cladding of the present invention realizes high-strength SiC joint at low temperature (<1500°C) and low pressure (<0.1MPa), the joining process is simple, and the joining process has a lower device requirement and reduces costs.

### DETAILED DESCRIPTION OF EMBODIMENTS

The present invention provides a brazing joining method of a silicon carbide cladding for joining a silicon carbide cladding tube and a matching end plug together to form a complete silicon carbide cladding. The brazing joining method includes the following steps:
S1. Using Al and Si as joining materials, and disposing the joining materials between the matching cladding tube and end plug to form an intermediate joining material with an Al/Si/Al three-layer structure, which cooperates with the cladding tube and the end plug to form a to-be-joined sample.

Wherein, the cladding tube is a silicon carbide cladding tube, and the end plug is a silicon carbide end plug.

The metals Al (aluminum) and Si (silicon) are used as the joining materials, and can be in the form of powder or sheet material, namely: Al is aluminum powder or aluminum foil (foil sheet); Si is silicon powder or silicon sheets. For raw materials in the form of powder, such as Si powder and Al powder, when providing the materials, the raw materials are first mixed in an organic solvent to form a slurry, and the slurry forms a corresponding layer by coating; or powder sheets are formed by pressing.

In addition, the purity of Al and Si are both 95% to 99% to ensure the joining effect.

For the Al/Si/Al three-layer structure (similar to a sandwich structure) of the intermediate joining material, the stacked structure includes an Al layer, a Si layer and an Al layer, that is, the Si layer is stacked between two Al layers.

In the intermediate joining material, the mass percentage of Si is 20% to 30% (of the entire intermediate joining material), preferably 27%.

There are various embodiments for disposing the intermediate joining material between the cladding tube and the end plug, as follows:
In a first embodiment, Al and Si are first stacked outside the cladding tube and the end plug to form an intermediate joining material with an Al/Si/Al three-layer structure, and then the intermediate joining material is placed between the cladding tube and the end plug.

In a second embodiment, Al is placed on the cladding tube and the end plug to form Al layers on the cladding tube and the end plug, respectively, Si is placed on any of the Al layers to form a Si layer, and then the cladding tube and the end plug are mated together so that the Al layers and the Si layer are stacked to form the intermediate joining material with the Al/Si/Al three-layer structure.

In a third embodiment, Al and Si are first stacked on the cladding tube or the end plug, with an intermediate joining material having an Al/Si/Al three-layer structure being formed on the cladding tube or the end plug, and then the cladding tube and the end plug are mated together such that the intermediate joining material is disposed between the cladding tube and the end plug.

S2. Placing the to-be-joined sample formed in step S1 in a vacuum or an inert atmosphere and conducing a brazing joint, the intermediate joining material forming an interlayer which joins the cladding tube and the end plug together.

When the Al layer or Si layer in the intermediate joining material is formed by mixing powders and an organic solvent to form a slurry and then coating, the to-be-joined sample is first dried to remove the organic solvent in the slurry prior to the brazing joint.

Specifically, the to-be-joined sample is placed in a tube furnace, and the brazing joining is performed in vacuum or an inert atmosphere (nitrogen or argon, etc.).

In the brazing joining, the temperature is raised to 1000°C to 1400°C at a heating rate of 5°C/min to 20°C/min, and the temperature is maintained for 0.5h to 2h. The joining pressure of the brazed process is 0.01MPa to 0.1MPa.

After the brazing joining, the intermediate joining material forms a dense interlayer that is tightly joined between the cladding tube and the end plug. In the interlayer, Al and Si are mixed together after being melted at a high temperature during the brazing process, so that the cross-section of the interlayer in the thickness direction does not exhibit a layered structure of Al and Si.

In the silicon carbide cladding formed by the above-described brazing joining method, the end plug is tightly joined to the cladding tube through the interlayer to seal an end opening of the cladding tube.

The leak-rate of the closed-end SiC cladding is 10⁻¹³ to 10⁻⁹ Pa·m3/s, the shear strength is 40MPa to 100MPa, the high temperature shear strength at 1200°C is 40MPa to 80MPa, and the corrosion rate of the closed-end SiC cladding is not higher than 10% of that of the cladding tube and the end plug.

The silicon carbide cladding of the present invention is used in a fuel assembly as a structural component of a fuel rod. Specifically, the fuel rod includes the above-described silicon carbide cladding, and also includes fuel pellets disposed in the silicon carbide cladding.

The fuel assembly includes a plurality of the above-described fuel rods that are arranged in parallel and spaced apart, and also includes a plurality of spacer grids positioned and spaced along an axial direction of the fuel rods. Detail structural components and their arrangements may be understood by referring to the fuel assemblies in the prior art.

The present invention will be further described below by way of specific examples.

### Example 1

A metal Al foil with a thickness of 15µm and Si powder with a particle size of 1µm are used as the joining materials. The Al foil and Si powder both have a purity of 99%. The Si powder was dispersed in anhydrous ethanol in advance, and after ultrasonic dispersion for 5 minutes, it is evenly applied on the Al foil to form an intermediate joining material having an Al/Si/Al layer arrangement, and the ratio of Si in the intermediate joining material is controlled to be 27 wt%.

The intermediate joining material is placed between the SiC cladding tube and the end plug to form a to-be-joined sample. The to-be-joined sample is dried in a vacuum oven at a temperature of 60°C to remove anhydrous ethanol. After being dried, the to-be-joined sample is placed in a tube furnace to perform SiC joint in a vacuum environment, with the temperature being increased to 1200°C at a heating rate of 10°C/min and maintained for one hour, and the pressure increased to 0.01MPa. After the joining process is completed, the SiC cladding is obtained.

A test shows that the room temperature shear strength of the prepared closed-end SiC cladding is 100MPa, the high temperature shear strength at 1200°C is 80MPa, and the leak-rate is 10⁻¹³ Pa·m³/s; after hydrothermal (400°C) corrosion, the corrosion rate of the closed-end SiC cladding is 5% higher than that of the cladding tube and the end plug.

### Example 2

A metal Al foil with a thickness of 15µm and Si powder with a particle size of 1µm are used as the joining materials. The Al foil and Si powder both have a purity of 99%. The Si powder was dispersed in anhydrous ethanol in advance, and after ultrasonic dispersion for 5 minutes, it is evenly applied on the Al foil to form an intermediate joining material having an Al/Si/Al layer arrangement, and the ratio of Si in the intermediate joining material is controlled to be 30 wt%.

The intermediate joining material is placed between the SiC cladding tube and the end plug to form a to-be-joined sample. The to-be-joined sample is dried in a vacuum oven at a temperature of 60°C to remove anhydrous ethanol. After being dried, the to-be-joined sample is placed in a tube furnace to perform SiC joint in a vacuum environment with the temperature being increased to 1200°C at a heating rate of 10°C/min and maintained for one hour, and the pressure increased to 0.01MPa. After the joining process is completed, the SiC cladding is obtained.

A test shows that the room temperature shear strength of the prepared closed-end SiC cladding is 60MPa, the high temperature shear strength at 1200°C is 40MPa, and the leak-rate is 10⁻¹⁰ Pa·m³/s; after hydrothermal (400°C) corrosion, the corrosion rate of the closed-end SiC cladding is 8% higher than that of the cladding tube and the end plug.

### Example 3

A metal Al foil with a thickness of 15µm and Si powder with a particle size of 1µm are used as the joining materials. The Al foil and Si powder both have a purity of 99%. The Si powder was dispersed in anhydrous ethanol in advance, and after ultrasonic dispersion for 5 minutes, it is evenly applied on the Al foil to form an intermediate joining material having an Al/Si/Al layer arrangement, and the ratio of Si in the intermediate joining material is controlled to be 25 wt%.

The intermediate joining material is placed between the SiC cladding tube and the end plug to form a to-be-joined sample. The to-be-joined sample is dried in a vacuum oven at a temperature of 60°C to remove anhydrous ethanol. After being dried, the to-be-joined sample is placed in a tube furnace to perform SiC joint in a vacuum environment with the temperature being increased to 1200°C at a heating rate of 10°C/min and maintained for one hour, and the pressure increased to 0.01MPa. After the joining process is completed, the SiC cladding is obtained.

A test shows that the room temperature shear strength of the prepared closed-end SiC cladding is 80MPa, the high temperature shear strength at 1200°C is 60MPa, and the leak-rate is 10⁻¹⁰ Pa·m³/s; after hydrothermal (400°C) corrosion, the corrosion rate of the closed-end SiC cladding is 6% higher than that of the cladding tube and the end plug.

### Example 4

A metal Al foil with a thickness of 10µm and a Si sheet with a thickness of 5µm are used as the joining materials. The Al foil and the Si sheet both have a purity of 99%. The Al foil and the Si sheet are stacked to form an intermediate joining material having an Al/Si/Al layer arrangement, and the ratio of Si in the intermediate joining material is controlled to be 20 wt%.

The intermediate joining material is placed between the SiC cladding tube and the end plug to form a to-be-joined sample. The to-be-joined sample is dried in a vacuum oven at a temperature of 60°C to remove anhydrous ethanol. After being dried, the to-be-joined sample is placed in a tube furnace to perform SiC joint in a vacuum environment with the temperature being increased to 1400°C at a heating rate of 10°C/min and maintained for two hours, and the pressure increased to 0.1MPa. After the joining process is completed, the SiC cladding is obtained.

A test shows that the room temperature shear strength of the prepared closed-end SiC cladding is 40MPa, the high temperature shear strength at 1200°C is 40MPa, and the leak-rate is 10⁻⁹ Pa·m³/s; after hydrothermal corrosion, the corrosion rate of the closed-end SiC cladding is 10% higher than that of the cladding tube and the end plug.

### Example 5

Al powder with a particle size of 5µm and Si powder with a particle size of 1µm are used as the joining materials. The Al powder and the Si powder both have a purity of 99%. The Al powder and the Si powder were respectively dispersed in anhydrous ethanol in advance, and were applied and stacked to form an intermediate joining material between the SiC cladding tube and the end plug, and the ratio of Si in the intermediate joining material is controlled to be 20 wt%.

A to-be-joined sample thus formed is dried in a vacuum oven at a temperature of 60°C to remove anhydrous ethanol. After being dried, the to-be-joined sample is placed in a tube furnace to perform SiC joint in an argon environment with the temperature being increased to 1000°C at a heating rate of 10°C/min and maintained for one hour, and the pressure increased to 0.1MPa. After the joining process is completed, the SiC cladding is obtained.

A test shows that the room temperature shear strength of the prepared closed-end SiC cladding is 70MPa, the high temperature shear strength at 1200°C is 50MPa, and the leak-rate is 10⁻⁹ Pa·m³/s; after hydrothermal corrosion, the corrosion rate of the closed-end SiC cladding is 10% higher than that of the cladding tube and the end plug.

### Example 6

Al powder with a particle size of 10µm and a Si sheet with a thickness of 5µm are used as the joining materials. The Al powder and the Si sheet both have a purity of 99%. Referring to the method of example 5, the Al powder is evenly mixed with anhydrous ethanol and then applied and stacked with the Si sheet to form an intermediate joining material between the SiC cladding tube and the end plug, and the ratio of Si in the intermediate joining material is controlled to be 30 wt%.

A to-be-joined sample thus formed is dried in a vacuum oven at a temperature of 60°C to remove anhydrous ethanol. After being dried, the to-be-joined sample is placed in a tube furnace to perform SiC joint in an argon environment, with the temperature being increased to 1200°C at a heating rate of 10°C/min and maintained for two hours, and the pressure increased to 0.1MPa. After the joining process is completed, the SiC cladding is obtained.

A test shows that the room temperature shear strength of the prepared closed-end SiC cladding is 70MPa, the high temperature shear strength at 1200°C is 60MPa, and the leak-rate is 10⁻⁹ Pa·m³/s; after hydrothermal corrosion, the corrosion rate of the closed-end SiC cladding is 9% higher than that of the cladding tube and the end plug.

### Comparative Example 1

A metal Al foil with a thickness of 15µm and Si powder with a particle size of 1µm are used as the joining materials. The Al foil and Si powder both have a purity of 99%. The Si powder was dispersed in anhydrous ethanol in advance, and after ultrasonic dispersion for 5 minutes, it is evenly applied on the Al foil to form an intermediate joining material having an Al/Si/Al layer arrangement, and the ratio of Si in the intermediate joining material is controlled to be 10 wt%.

The intermediate joining material is placed between the SiC cladding tube and the end plug to form a to-be-joined sample. The to-be-joined sample is dried in a vacuum oven at a temperature of 60°C to remove anhydrous ethanol. After being dried, the to-be-joined sample is placed in a tube furnace to perform SiC joint in a vacuum environment with the temperature being increased to 1200°C at a heating rate of 10°C/min and maintained for one hour, and the pressure increased to 0.01MPa. After the joining process is completed, the SiC cladding is obtained.

The room temperature shear strength of the prepared closed-end SiC cladding is 30MPa, the high temperature shear strength at 1200°C is 10MPa, and the leak-rate is 10⁻⁵ Pa·m³/s. After hydrothermal corrosion, the junction between the cladding tube and the end plug cracks, indicating that pores are produced in the interlayer after the hydrothermal corrosion.

### Comparative Example 2

A metal Al foil with a thickness of 15µm and Si powder with a particle size of 1µm are used as the joining materials. The Al foil and Si powder both have a purity of 99%. The ratio of Si in the resulted intermediate joining material is controlled to be 40 wt%. The SiC cladding is then obtained according to the joining process as described in comparative example 1.

The room temperature shear strength of the prepared closed-end SiC cladding is 20MPa, the high temperature shear strength at 1200°C is 20MPa, and the leak-rate is 10⁻⁶ Pa·m³/s. After hydrothermal corrosion, the junction between the cladding tube and the end plug cracks, indicating that pores are produced in the interlayer after the hydrothermal corrosion.

The above are only embodiments of the present invention and do not limit the scope of the present invention.

## Claims

1. A brazing joining method for a silicon carbide cladding, **characterized in that** the brazing joining method comprises the following steps:
S1. using Al and Si as joining materials, and providing the joining materials between a cladding tube and an end plug that match to each other, to form an intermediate joining material with an Al/Si/Al three-layer structure, which cooperates with the cladding tube and the end plug to form a to-be-joined sample, wherein the mass percentage of Si is 20%-30% of the intermediate joining material, wherein the Al and Si both have a purity of 95%-99%;
S2. placing the to-be-joined sample in a vacuum or an inert atmosphere and performing the brazing joining, with the intermediate joining material forming a interlayer that joins the cladding tube and the end plug together, wherein, in the brazing joining, the temperature is raised to 1000°C to 1400°C at a heating rate of 5°C/min to 20°C/min and maintained for 0.5h to 2h, and the joining pressure is 0.01MPa to 0.1MPa.

2. The brazing joining method for a silicon carbide cladding according to claim 1, **characterized in that**, in step S1, the Al is aluminum powder or aluminum foil, and the Si is silicon powder or silicon sheet.

3. The brazing joining method for a silicon carbide cladding according to claim 1 or 2, wherein in step S1, Al and Si are first stacked to form the intermediate joining material with the Al/Si/Al three-layer structure, which is then placed between the cladding tube and the end plug.

4. The brazing joining method for a silicon carbide cladding according to claim 1 or 2, wherein in step S1, Al is placed on the cladding tube and the end plug to form Al layers on the cladding tube and the end plug, respectively, Si is placed on any one of the Al layers to form a Si layer, and then the cladding tube and the end plug are mated together, so that the Al layers and the Si layer are stacked to form the intermediate joining material with the Al/Si/Al three-layer structure.

5. The brazing joining method for a silicon carbide cladding according to claim 1 or 2, **characterized in that**, in step S1, Al and Si are first stacked on the cladding tube or the end plug to form the intermediate joining material with the Al/Si/Al three-layer structure on the cladding tube or the end plug, and then the cladding tube and the end plug are mated together, so that the intermediate joining material is placed on the cladding tube and the end plug.

## Patentansprüche

1. Hartlöt-Fügeverfahren für eine Siliziumkarbid-Umhüllung, **dadurch gekennzeichnet, dass** das Hartlöt-Fügeverfahren die folgenden Schritte umfasst:
S1. Verwenden von Al und Si als Fügematerialien und Bereitstellen der Fügematerialien zwischen einem Hüllrohr und einem Endstopfen, die zueinander passen, um ein Zwischenfügematerial mit einer Al/Si/Al-Dreischichtstruktur zu bilden, das mit dem Hüllrohr und dem Endstopfen zusammenwirkt, um eine zu fügende Probe zu bilden, wobei der Massenanteil an Si 20 %-30 % des Zwischenfügematerials beträgt, wobei das Al und das Si beide eine Reinheit von 95 %-99 % aufweisen;
S2. Platzieren der zu fügenden Probe in einem Vakuum oder einer inerten Atmosphäre und Durchführen des Hartlöt-Fügens, wobei das Zwischenfügematerial eine Zwischenschicht bildet, die das Hüllrohr und den Endstopfen miteinander fügt, wobei beim Hartlöt-Fügen die Temperatur mit einer Aufheizrate von 5 °C/min-20 °C/min auf 1000 °C-1400 °C erhöht und für 0,5 h-2 h gehalten wird, und der Fügedruck 0,01 MPa-0,1 MPa beträgt.

2. Hartlöt-Fügeverfahren für eine Siliziumkarbid-Umhüllung nach Anspruch 1, **dadurch gekennzeichnet, dass** in Schritt S1 das Al Aluminiumpulver oder Aluminiumfolie ist und das Si Siliziumpulver oder Siliziumblech ist.

3. Hartlöt-Fügeverfahren für eine Siliziumkarbid-Umhüllung nach Anspruch 1 oder 2, wobei in Schritt S1 Al und Si zuerst gestapelt werden, um das Zwischenfügematerial mit der Al/Si/Al-Dreischichtstruktur zu bilden, das dann zwischen dem Hüllrohr und dem Endstopfen platziert wird.

4. Hartlöt-Fügeverfahren für eine Siliziumkarbid-Umhüllung nach Anspruch 1 oder 2, wobei in Schritt S1 Al auf dem Hüllrohr und dem Endstopfen platziert wird, um jeweils Al-Schichten auf dem Hüllrohr und dem Endstopfen zu bilden, Si auf einer beliebigen der Al-Schichten platziert wird, um eine Si-Schicht zu bilden, und dann das Hüllrohr und der Endstopfen zusammengefügt werden, sodass die Al-Schichten und die Si-Schicht gestapelt werden, um das Zwischenfügematerial mit der Al/Si/Al-Dreischichtstruktur zu bilden.

5. Hartlöt-Fügeverfahren für eine Siliziumkarbid-Umhüllung nach Anspruch 1 oder 2, **dadurch gekennzeichnet, dass** in Schritt S1 Al und Si zuerst auf dem Hüllrohr oder dem Endstopfen gestapelt werden, um das Zwischenfügematerial mit der Al/Si/Al-Dreischichtstruktur auf dem Hüllrohr oder dem Endstopfen zu bilden, und dann das Hüllrohr und der Endstopfen zusammengefügt werden, sodass das Zwischenfügematerial auf dem Hüllrohr und dem Endstopfen platziert ist.

## Revendications

1. Procédé de jonction par brasage d'une gaine en carbure de silicium, **caractérisé en ce que** le procédé de jonction par brasage comprend les étapes suivantes :
S1. utilisation de Al et Si comme matériaux de jonction, et fourniture des matériaux de jonction entre un tube de gaine et un bouchon d'extrémité qui correspondent l'un à l'autre, pour former un matériau de jonction intermédiaire avec une structure à trois couches Al/Si/Al, qui coopère avec le tube de gaine et le bouchon d'extrémité pour former un échantillon à joindre, dans lequel le pourcentage massique de Si est de 20 % à 30 % du matériau de jonction intermédiaire, dans lequel Al et Si ont tous deux une pureté de 95 % à 99 % ;
S2. placement de l'échantillon à joindre sous vide ou sous atmosphère inerte et réalisation de la jonction par brasage, le matériau de jonction intermédiaire formant une couche intermédiaire qui relie le tube de gaine et le bouchon d'extrémité ensemble, dans lequel, lors de la jonction par brasage, la température est portée à 1000 °C à 1400 °C à une vitesse de chauffage de 5 °C/min à 20 °C/min et maintenue pendant 0,5 h à 2 h, et la pression de jonction est de 0,01 MPa à 0,1 MPa.

2. Procédé de jonction par brasage d'une gaine en carbure de silicium selon la revendication 1, **caractérisé en ce que**, à l'étape S1, l'Al est de la poudre d'aluminium ou une feuille d'aluminium, et le Si est de la poudre de silicium ou une feuille de silicium.

3. Procédé de jonction par brasage d'une gaine en carbure de silicium selon la revendication 1 ou 2, dans lequel, à l'étape S1, Al et Si sont d'abord empilés pour former le matériau de jonction intermédiaire avec la structure à trois couches Al/Si/Al, qui est ensuite placée entre le tube de gaine et le bouchon d'extrémité.

4. Procédé de jonction par brasage d'une gaine en carbure de silicium selon la revendication 1 ou 2, dans lequel, à l'étape S1, de l'aluminium est placé sur le tube de gaine et le bouchon d'extrémité pour former des couches d'Al sur le tube de gaine et le bouchon d'extrémité, respectivement, du Si est placé sur l'une des couches d'Al pour former une couche de Si, puis le tube de gaine et le bouchon d'extrémité sont accouplés, de sorte que les couches d'Al et la couche de Si sont empilées pour former le matériau de jonction intermédiaire avec la structure à trois couches Al/Si/Al.

5. Procédé de jonction par brasage d'une gaine en carbure de silicium selon la revendication 1 ou 2, **caractérisé en ce que**, à l'étape S1, l'Al et le Si sont d'abord empilés sur le tube de gaine ou le bouchon d'extrémité pour former le matériau de jonction intermédiaire avec la structure à trois couches Al/Si/Al sur le tube de gaine ou le bouchon d'extrémité, puis le tube de gaine et le bouchon d'extrémité sont accouplés, de sorte que le matériau de jonction intermédiaire est placé sur le tube de gaine et le bouchon d'extrémité.
